# EUROPEAN PATENT APPLICATION

(11) **EP 1 457 919 A1**
(43) Date of publication of application: **15.09.2004**
(21) Application number: 04075706.4
(22) Date of filing: 08.03.2004
(51) Int. Cl.: G06K 13/08, G06K 7/00

(54) **Integrated circuit and magnetic stripe reader**

(30) Priority: 07.03.2003 US 383393; 18.11.2003 US 716759
(71) Applicant: MAG-TEK, INC., Carson, CA 90746 (US)
(72) Inventor: Lucas, Bennie E., Long Beach California 90815 (US); McJones, Justin F., Rancho Palos Verdes California 90275 (US); Parsons, Jerry W., Long Beach California 90807 (US); Tayeban, Kevin, Los Angeles California 90049 (US); Fisher, Richard C., San Pedro California 90732 (US)
(74) Representative: Newstead, Michael John

(57) **Abstract**

Methods and apparatus are described for reading data from either a magnetic stripe, a chip or both a magnetic stripe and a chip located on a data card using a single swiping motion. An aspect of the methods and apparatus described is that movement of a data card is detected, restrained and/or prevented during exchange of information between the reader and any integrated circuits located on the data card. One embodiment includes guiding walls that form a channel and that are connected to a receiver having an interior surface, a magnetic reading head mounted on one of the guiding walls, electrical contacts located on the interior surface of the receiver and a latch extending at least partially across the channel formed by the guiding walls.

## Description

### CROSS-REFERENCE TO RELATED APPLICATION

This application is a continuation-in-part of U.S. Patent Application No. 10/383,393, filed March 7, 2003, entitled "Integrated Circuit and Magnetic Strip Reader," the disclosure of which is hereby incorporated by reference as if set forth in full herein.

### BACKGROUND OF THE INVENTION

The present invention relates generally to data card readers. More specifically, the invention relates to card readers capable of reading data from either a magnetic stripe or an integrated circuit located on a card or both.

Magnetic stripe cards are a form of data card that has become ubiquitous as a means of transporting, presenting and preserving data. The many uses for magnetic stripe cards include credit cards, debit cards, security cards and tickets. Typically, data is encoded on the magnetic stripe and this data is used to facilitate a transaction between the cardholder and an electronic device. Magnetic stripe cards can be susceptible to fraud, however. Often, reproduction of the information stored on a magnetic stripe card is sufficient to enable an imposter to transact as if he or she possessed the actual magnetic stripe card.

In certain applications, the use of a data card bearing an integrated circuit ("chip card") can provide increased security. In order to minimize disruption caused by the introduction of chip cards into an environment where magnetic stripe cards are already in use, it is desirable for a single device to read magnetic stripe cards, chip cards and hybrid magnetic stripe/chip cards. Magnetic stripe card readers often receive data from magnetic stripe cards by the user swiping a card through a slot containing a magnetic reading head. The inconvenience to merchants caused by the introduction of a new reader can be reduced by providing a device capable of reading data from magnetic stripe cards, chip cards and hybrid magnetic stripe/chip cards using a swiping action cardholders are familiar with due to their use of conventional magnetic stripe card readers.

One difficulty with designing such a new swipe reader is that movement of a chip card while it is in communication with the reader can result in system failure. Therefore, a challenge in constructing a multi-function swipe reader has been limiting the movement of the cards while they communicate with the reader.

### SUMMARY OF THE INVENTION

Embodiments of the present invention can provide an improved method of reading data from magnetic stripe cards, chip cards and hybrid magnetic stripe/chip cards using a single swiping motion similar to the swiping motion employed in conventional magnetic stripe card readers. Several embodiments of the invention include the advantage of constraining the motion of a data card while the reader and an integrated circuit mounted on the card communicate. Other embodiments of the invention include the advantages of detecting motion of the data card while the reader and an integrated circuit mounted on the card communicate.

One embodiment that reads data from a data card possessing an integrated circuit and/or a magnetic stripe includes guiding walls that form a channel and that are connected to a receiver having an interior surface, a magnetic reading head mounted on one of the guiding walls, electrical contacts located on the interior surface of the receiver and a latch extending at least partially across the channel formed by the guiding walls.

A further embodiment also includes a chassis cavity, where the latch is partially located inside the chassis cavity and includes a spring loaded slider. Another embodiment also includes a motor connected to the latch, where the position of the latch is controlled using the motor. In a still further embodiment, the latch is pivotally mounted.

In yet another embodiment, the data card cannot move through the channel past the latch when the latch extends at least partially across the channel and the latch is capable of moving so that a data card can pass through the channel.

A still further embodiment again includes guiding walls that form a channel and that are connected to a receiver having an interior surface, a magnetic reading head mounted on one of the guiding walls, electrical contacts located on the interior surface of the receiver, where the receiver comprises a base, a rear wall and side walls and where the side walls form an entrance to the receiver and where at least one of the base, rear wall or a side wall is located to have a surface that contacts the card when it is located within the receiver. In addition, friction between the surface in contact with the card resists removal of the card from the receiver.

In yet another embodiment again, the receiver further comprises a top wall. Alternatively, the side walls are configured to form an opening in the top of the receiver, the interior surface of the receiver is configured to contact the surface of the data card, when the data card is within the receiver and friction between the interior surface and the data card resists removal of the data card from the opening in the top of the receiver. In many embodiments, the interior surface of the receiver can contain compressible features.

Yet a still further embodiment includes guiding walls that form a channel and that are connected to a receiver having an interior surface, a magnetic reading head mounted on one of the guiding walls, electrical contacts located on the interior surface of the receiver and at least one clip that engages a data card inserted into the receiver, where friction between the clip and the data card resists removal of the data card from the receiver.

Still another embodiment again includes guiding walls that form a channel and that are connected to a receiver having an interior surface, a magnetic reading head mounted on one of the guiding walls, electrical contacts located on the interior surface of the receiver, where the receiver comprises a base and side walls and a roller is mounted in a side wall of the receiver. In addition, the side walls form an entrance to the receiver and an opening in the top of the receiver, the roller is configured to rotate as the data card is inserted into the receiver through the receiver entrance and friction between the surface of the roller and the data card resists removal of the data card from the opening in the top of the receiver. In still yet another embodiment again, the roller is non-axisymmetrical.

Still yet another further embodiment includes guiding walls that form a channel and that are connected to a receiver having an interior surface, a magnetic reading head mounted on one of the guiding walls and electrical contacts located on the interior surface of the receiver, where the receiver includes at least two side walls, a rotating wedge mounted in one of the side walls and a card guide located on the opposite side wall. In addition, the rotating wedge occupies a first position prior to entry of a data card into the receiver, inserting a data card into the receiver when the rotating wedge is in the first position, causes the rotating wedge to rotate to a second position, and attempting to remove a data card from the receiver when the rotating wedge is in the second position causes the rotating wedge to force the data card against the card guide in a manner that resists the removal of the data card.

In still yet another further embodiment again, the pivoting wedge comprises a spring loaded wheel housed within a ramped cavity in a side wall of the receiver. In still yet another further additional embodiment, the pivoting wedge comprises a wedge arm pivotally mounted within a cavity in one of the side walls of the receiver.

Still yet another further additional embodiment again includes guiding walls that form a channel and that are connected to a receiver having an interior surface, a magnetic reading head mounted on one of the guiding walls, electrical contacts located on the interior surface,of the receiver and a sensor configured to detect movement of a card inserted into the receiver.

In one embodiment, the method of the invention includes moving the magnetic stripe relative to a magnetic reading head, applying forces to the card that resist motion of the card and reading data from the card while the forces that resist motion of the card are applied to the card.

### BRIEF DESCRIPTION OF THE DRAWINGS

FIG. 1 is an isometric view illustrating one side of a card reader constructed in accordance with the present invention including a magnetic reading head that can read information recorded on magnetic stripes and electrical contacts capable of communicating with an integrated circuit;
FIG. 2 is another isometric view of the card reader of FIG. 1 showing a spring loaded latch that can be used to constrain the motion of a card that is communicating with the card reader;
FIG. 3 is a partial exploded cut away view of the spring loaded latch shown in FIGS. 1 and 2;
FIGS. 4A - 4C are somewhat diagrammatic horizontal cross-sectional views of the card reader of FIGS. 1 and 2 taken along the line 53 of FIG. 1 showing the movement of a spring loaded latch as a card is guided into a receiver;
FIG. 5 is an isometric view illustrating one side of a card reader constructed in accordance with the present invention including a spring loaded latch and a motor for immobilizing the latch once a card is in the card reader's receiver;
FIG. 6 is a flow diagram illustrating a process in accordance with the present invention for operating the motor of the card reader shown in FIG. 5;
FIG. 7 is a partial exploded view of a card reader similar to the card reader shown in FIGS. 1 - 4C that includes a latch mounted on a flexible arm;
FIG. 8 is a cross-sectional view similar to the cross-sections shown in FIGS. 4A-4C which illustrates an embodiment of'a card reader in accordance with the present invention that includes a pivoting latch capable of preventing removal of a data card from the card reader's receiver;
FIG. 9 is a somewhat diagramatic vertical cross-sectional view of a card reader in accordance with the present invention that is similar to the card reader shown in FIGS. 1 - 4C and taken in a location similar to the line 53 shown in FIG. 1, where the card reader illustrated in FIG. 9 includes a receiver with an interior surface that constrains the motion of a data card;
FIGS. 10A and 10B are horizontal cross-sectional views of a card reader in accordance with an embodiment of the present invention, similar to the card reader shown in FIG. 9, taken in a location similar to the line 126 of FIG. 9, where the card reader shown in FIG. 10 uses compressible materials to generate friction between the interior surface of a receiver and a data card;
FIG. 11 is a somewhat diagramatic vertical cross-sectional view, similar to FIG. 9, showing another embodiment of a card reader in accordance with the present invention including a receiver having an entrance, an additional opening and an interior surface configured to constrain the motion of a data card;
FIG. 12 is a vertical cross-sectional view, similar to FIG. 11, of a further embodiment of a card reader in accordance with the present invention including retaining clips that constrain the motion of a data card;
FIG. 13 is a vertical cross-sectional view, similar to FIG. 11, showing yet another embodiment of a card reader in accordance with the present invention including rollers that can constrain the motion of a data card;
FIG. 14 is a somewhat diagramatic horizontal cross-sectional view of a card reader, similar to the card reader of FIG. 13, taken along the line 166 showing elliptical rollers used to constrain the motion of a data card;
FIG. 15 is a cross-sectional view, similar to the cross-sections shown in FIGS. 10A and 10B, of a card reader in accordance with the present invention that includes a pivotally mounted wedge arm for opposing the removal of a data card from the card reader's receiver;
FIG. 16 is a cross-sectional view, similar to the cross-sections shown in FIGS. 10A and 10B, of a card reader in accordance with the present invention that includes a spring loaded lock-wheel housed in a ramped cavity for opposing the removal a data card from the card reader's receiver; and
FIG. 17 is a cross sectional view similar to FIG. 9 showing an embodiment of a card reader in accordance with the present invention incorporating a sensor to detect card lift-out.

### DETAILED DESCRIPTION OF THE INVENTION

Referring to the drawings, a card reader 10 constructed in accordance with one embodiment of the present invention includes a card receiver 12 and card guiding walls 14 that extend outwardly from the entrance of the card receiver 16. The guiding walls form a channel to guide a data card 18 past a magnetic reading head 20 and into the card receiver. As a card including an integrated circuit enters the receiver, contacts within the receiver (not visible) become aligned with specific locations on the card surface 24 where contacts connected to an integrated circuit may be located. The mating of the two sets of contacts enables communication between the reader 10 and the integrated circuit to read and/or write information to the card. Once inside the receiver, the motion of the card is constrained to reduce the risk that the card will inadvertently move away from its intended location while information is being exchanged between the reader 10 and the integrated circuit. In this way, the card reader enables data to be read from both a magnetic stripe and an integrated circuit located on a data card in a single swiping action. At the same time, the potential for communication between the reader and the data card to be interrupted due to movement of the data card is minimized. A variety of techniques can be used to prevent movement of the data card, a number of which are discussed below.

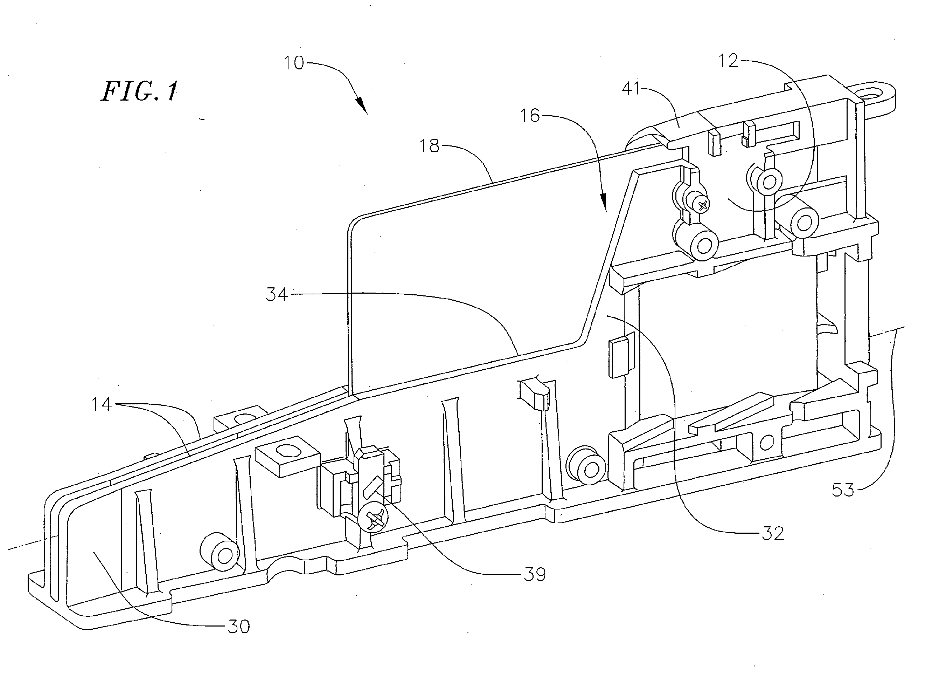

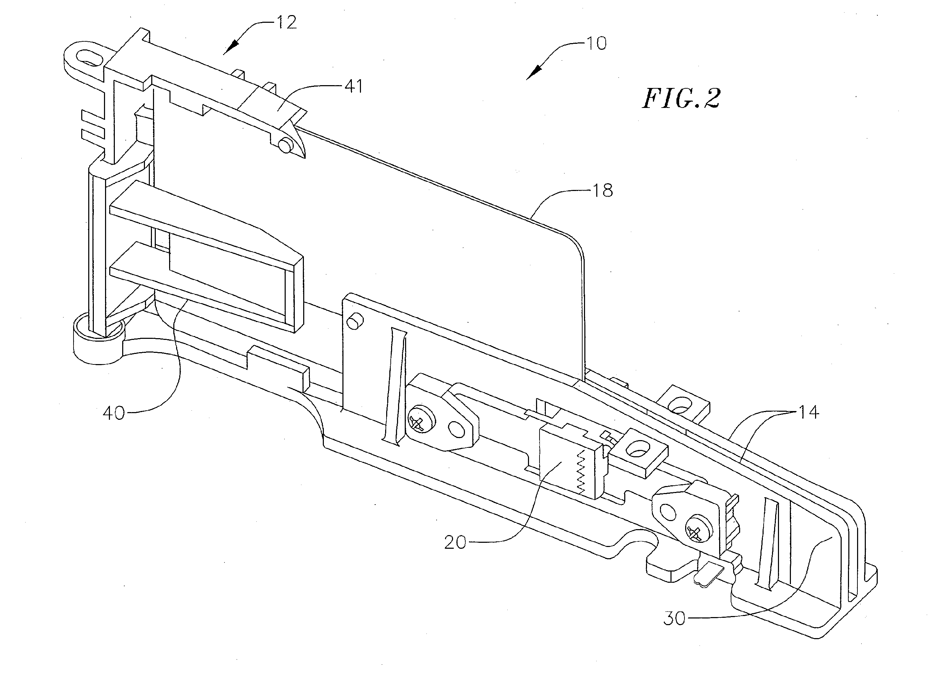

A card reader 10 in accordance with the present invention is illustrated in FIGS. 1 and 2. The card reader includes guiding walls 14 that are flared at one end 30 to guide a data card into a channel created by the guiding walls. The guiding walls guide the card to the receiver entrance 16. The receiver entrance is formed by at least one wall 32 referred to as a receiver side wall. The receiver side wall is cut to assist the guiding of the card into the receiver.

The shape of the receiver entrance 16 determines the ease with which a card is inserted into the receiver. If the receiver wall is constructed to form a right angle with the top edge 34 of the guiding walls, then a flexible data card can catch against the receiver wall during insertion. Providing a curved transition between the top edge of the guiding walls and the receiver entrance reduces the likelihood that a card will catch as it is inserted into the receiver. An example of a suitable curved transition is shown in FIGS. 1 and 2. The extent of curvature required to prevent the card edge from catching on the walls of the receiver is dependent upon the width of the channel formed by the guiding walls and the flexibility of the cards read by the reader. Less curvature is required if the channel is narrower or the flexibility of the card is reduced. The likelihood of a card catching on a receiver side wall can also be reduced by flaring the receiver walls 32 at the receiver entrance 16. The flaring can guide the leading edge of a flexed card into the receiver.

A magnetic reading head 20 is mounted on one side of the channel formed by the card guiding walls 14. The magnetic reading head can be mounted to read information that is recorded on a magnetic stripe as a data card possessing a magnetic stripe is swiped past the magnetic reading head.

Contacts (not visible) for communicating with integrated circuits mounted on data cards are located on the inside of the receiver 12. In systems where ISO data cards are used, the contacts are mounted on the receiver side wall 32 opposite the guide wall 14 on which the magnetic reading head is attached. In other embodiments, multiple magnetic reading heads can be used and the location of the contacts within the receiver can be independent of the location of any of the magnetic reading heads.

The receiver also includes a card guide 40 that urges the contacts on the card against the contacts in the card reader, increasing the likelihood that an electrical connection is made when warped cards are inserted into the card reader. In other embodiments, card guides can be replaced with mechanically or electronically activated retaining clips. In addition to urging the contacts of warped cards against the receiver contacts, retaining clips can provide additional resistance to the removal of the data card from the receiver. In one embodiment, the retaining clips are spring loaded and configured to grip the card in response to the triggering of a sensor and release the card following exchange of information between the integrated circuit on the card and the card reader. The loading on the clips can also be achieved using an electromechanical system such as an inductive coil that utilizes magnetic forces to move the retaining clips or an electrical motor to achieve the same function.

The card reader also includes a spring loaded latch 39. The receiver wall 32, the card guides 40, the roof of the receiver 41 and the spring loaded latch 39 act to substantially limit the motion of a card within the receiver. Once a card is inside the receiver, the card is free to move only in the direction required to withdraw the card from the receiver entrance. The presence of the spring loaded latch acts to resist the removal of the card from the receiver entrance. By resisting the removal of the data card, the spring loaded latch 39 prevents inadvertent movement that might otherwise break the contact between the reader and an integrated circuit on a data card while information is being exchanged via the contact.

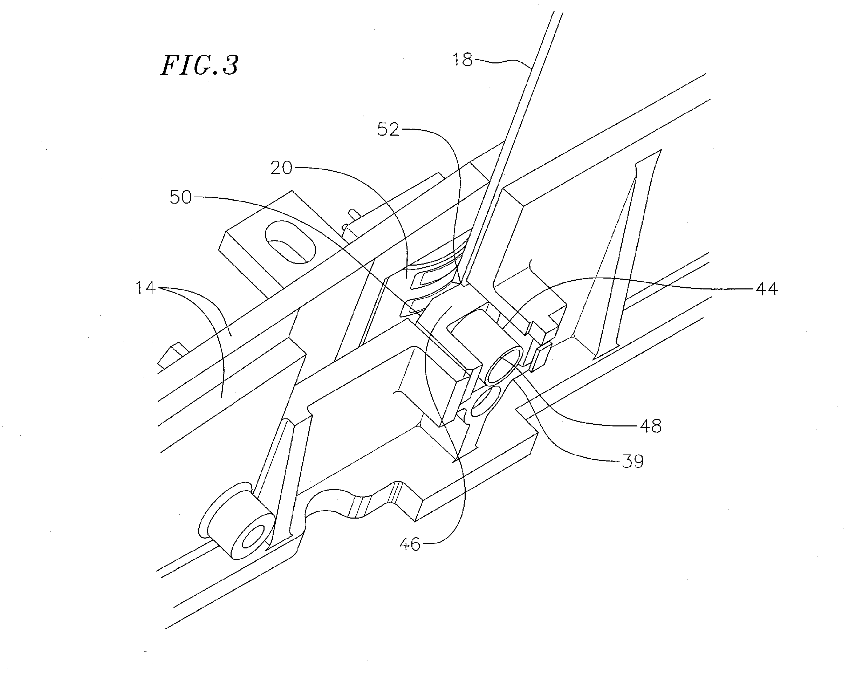

A partial exploded cut away view of the spring loaded latch shown in FIGS. 1 and 2 is illustrated in FIG. 3. The spring loaded latch 39 is mounted inside a chassis cavity 44 and includes a slider 46 mounted to a slider spring 48. The slider extends into the channel formed by the two guiding walls 14. The portion of the slider extending into the channel includes a slider entry surface 50 and a slider locking surface 52.

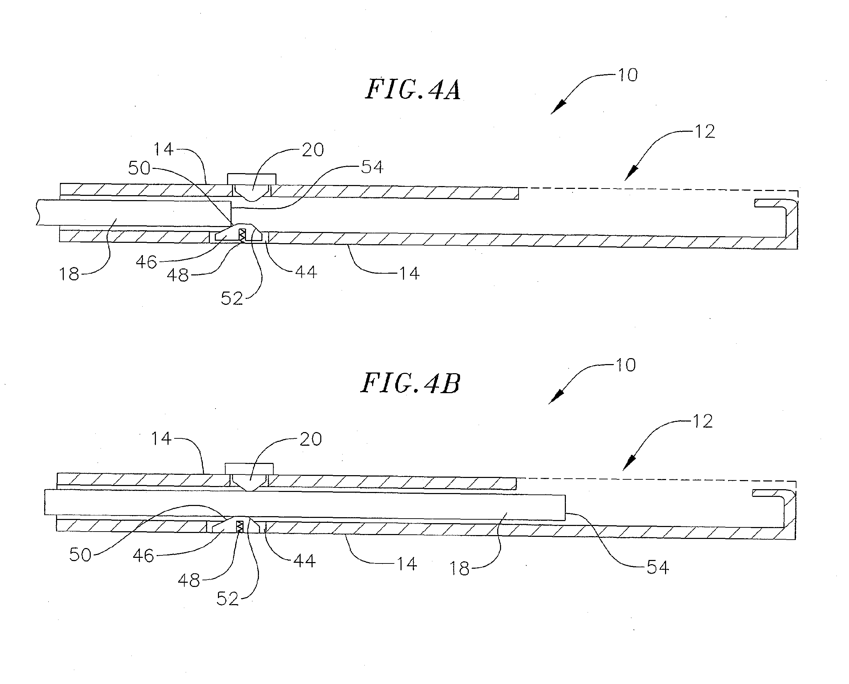

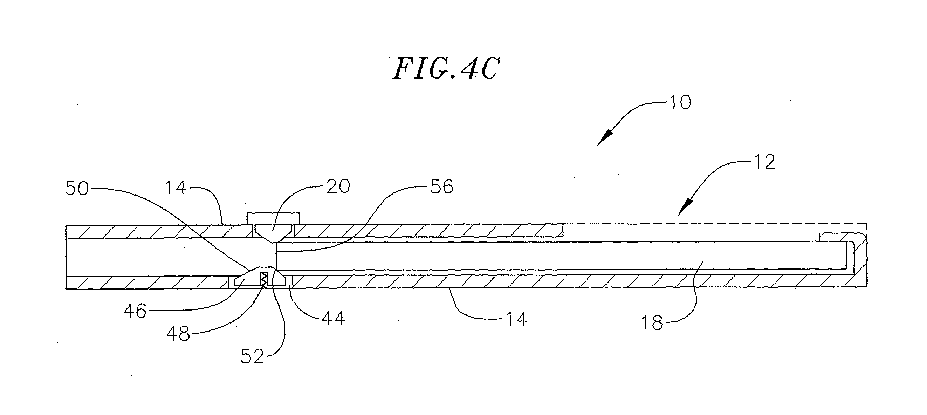

Movement of the spring loaded latch shown in FIGS. 1 - 3 as a card is swiped through the channel formed by the guiding walls is illustrated in FIGS. 4A - 4C. A card being pushed into the card reader is shown in FIG. 4A. As the card 18 is swiped through the card reader 10, the guiding walls 14 cause the card to encounter the slider entrance surface 50 and the leading edge 54 of the card forces the slider into the chassis cavity enabling the card to be inserted into the receiver 12.

The position of the slider as a card moves past the magnetic reading head is shown in FIG. 4B. As the card 18 moves past the magnetic reading head 20 and into the receiver 12, the slider 46 is forced into the chassis cavity 44. In one embodiment, the latch spring 48 forces the card against the magnetic reading head 50, which is mounted on the guiding wall opposite the latch. In this embodiment, the magnetic reading head is mounted so that a card entering the card reader encounters the spring loaded latch prior to encountering the magnetic reading head. This configuration can prevent misreads of the magnetic stripe that could result from a significant change in the velocity of the card while its magnetic data is being read due to the leading edge of the card encountering the spring loaded latch.

The position of the slider, when a card is completely inserted into the receiver is shown in FIG. 4C. The spring loaded latch 39 is typically located to ensure that the slider locking surface 52 contacts the rear edge 56 of a card. Locating the latch in this manner provides tactile feedback to the user that the card is correctly inserted into the receiver. In addition, the latch resists movement of a card inserted in the receiver.

Differences in the gradient of the slider entry and locking surfaces can control the difference in the forces required to insert a card into the receiver and to remove a card from the receiver. In the illustrated embodiment, the slider entrance surface 50 has a low gradient and the slider locking surface 52 has a high gradient. The high gradient of the slider locking surface directs a high proportion of any force applied to the latch by the edge of a card in a direction perpendicular to the direction required to compress the slider spring 48. Consequently, a significant force is required to compress the slider spring, release the latch and allow the card to be removed from the receiver 12. In other embodiments, the gradients of the surfaces can be the same and objects that produce entry and locking surfaces of uneven gradient such as a ball bearing can be used to construct the slider.

The embodiment shown in FIGS. 1 - 4C is configured to enable a user to swipe a data card past a magnetic reading head into a receiver that restricts the motion of the data card, which enables information to be reliably read from or written to an integrated circuit located on the card. Additional techniques can be used to limit the movement of a data card once it is inside the receiver.

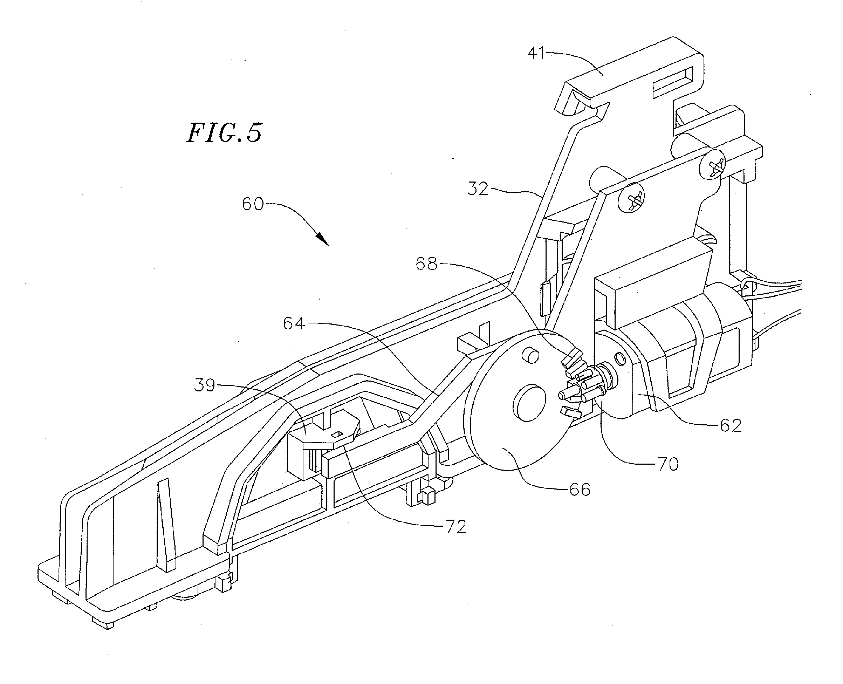

An embodiment of a card reader in accordance with the present invention that includes a motorized latch is shown in FIG. 5. The card reader 60 is similar to the card reader 10 shown in FIGS. 1 - 4C, except that the spring loaded latch 39 can be moved by a motor 62. In the illustrated embodiment, the rear of the latch spring (not visible) presses against a sliding arm 64, which is connected to a wheel 66. Teeth 68 on the wheel enable the wheel to be rotated by a gear 70 driven by a motor 62. The surface 72 of the sliding arm 64 that contacts the rear of the latch spring is ramped. In a first position, the slider arm does not compress the slider spring and the slider can be forced into the chassis cavity by a data card moving through the channel formed by the guiding walls. In a second position, the slider arm compresses the slider spring, which prevents the slider from being forced into the chassis cavity.

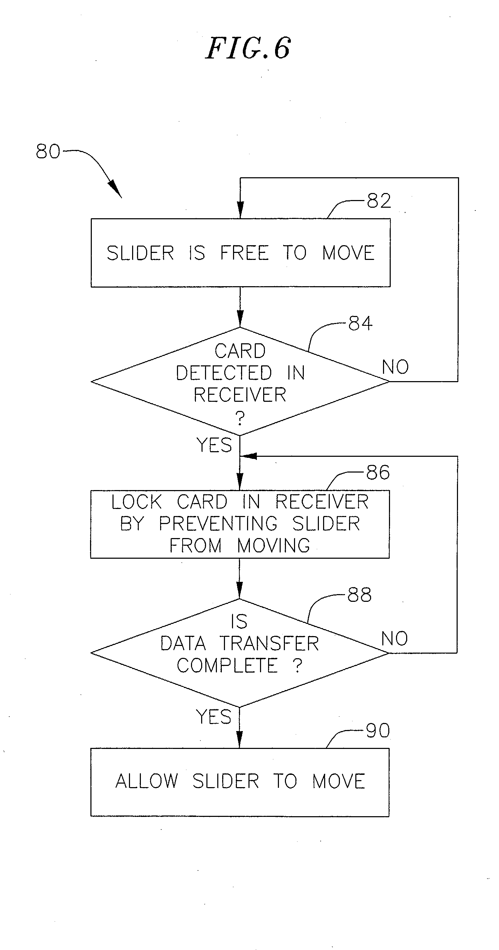

A flow chart illustrating a process 80 in accordance with the present invention for restraining a card during data exchange with the card reader shown in FIG. 5 is illustrated in FIG. 6. Initially (82), the slider arm occupies the first position. Once the card is inserted (84) into the receiver and is communicating with the card reader, then the card reader can drive the motor to move (86) the slide arm to the second position. Therefore, the card is locked into the receiver while data is being exchanged. Once the data exchange is complete (88), the motor can return (90) the slide arm to the first position and the card can be removed from the receiver.

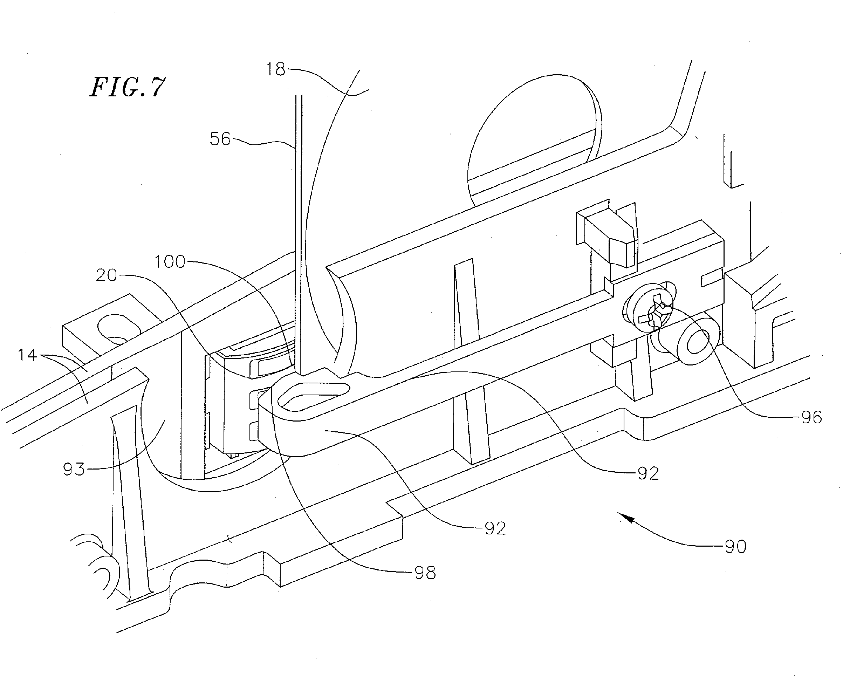

An embodiment of a card reader in accordance with the present invention similar to the card reader shown in FIGS. 1 - 4C is illustrated in FIG. 7. The card reader 90 includes a latch 92 that extends into the channel formed by the guiding walls 14 through an opening 93 in one of the guiding walls. The latch is connected to the card reader via a flexible arm 94 that is secured to the card reader via a fastener 96 such as a screw. The flexible arm performs a similar function to the latch spring 48 of the embodiment illustrated in FIGS. 1 - 4C. The flexible arm provides a resistance to the latch being forced from the channel formed by the guiding walls. The latch has an entrance surface 98 that has a low gradient and a latch locking surface 100 that has a high gradient. In a similar manner to the way in which the surfaces of the slider 46, described above, can determine the force required to insert and remove a card from a card reader, the entrance and locking surfaces of the latch 92 determine the forces required to insert and remove a card from the receiver of the card reader 90.

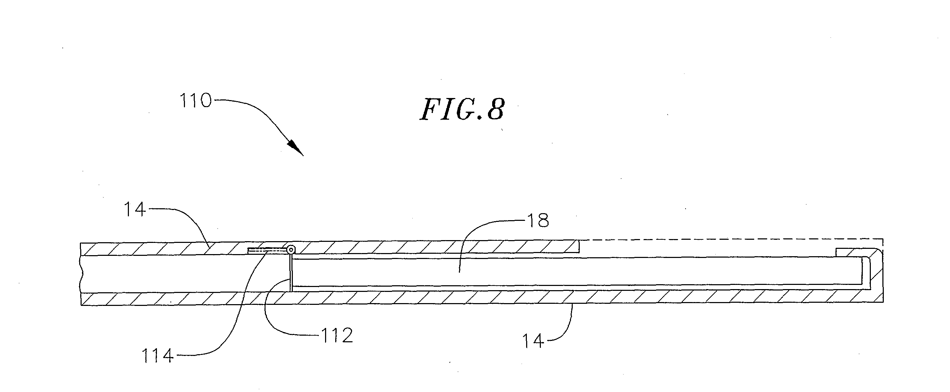

A cross section of a card reader in accordance with an embodiment similar to the reader shown in FIGS. 1 - 4C that utilizes a pivoting latch to immobilize data cards once they have been fully inserted into the receiver is illustrated in FIG. 8. The reader 110 includes at least one pivoting latch 112 that can be mounted within the guiding walls or the base of the reader. The pivoting latch can move from a first position (ghost lines), where a data card 18 can be freely inserted into or removed from the receiver 12, to a second position (shown), where data cards are prevented from being inserted into or removed from the receiver. In the embodiment shown, the latch is in the second position described above and can be pivotally rotated into the first position described above, where the latch rests in an alcove 114 within the guiding wall. The latch can be spring loaded and move in response to the triggering of a sensor inside the receiver or be electromechanically driven using an inductive coil, electric motor or similar device.

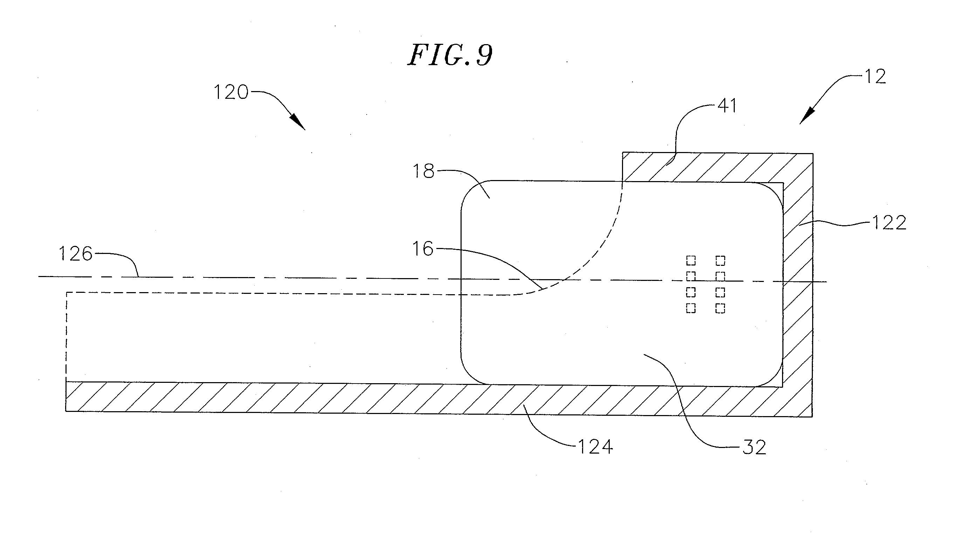

FIG. 9 illustrates a card reader 120 in accordance with the present invention that uses the interior surfaces of the receiver to restrain a card. A data card 18 is shown within the receiver 12. The receiver includes a top wall 41, a rear wall 122, a base 124 and side walls 32 that prevent all movement of the data card except removal of the data card from the receiver entrance 18. Removal of the card from the receiver entrance is resisted by friction between the portions of the top wall, rear wall, base and side walls of the receiver that are in contact with the data card. The amount of friction that exists between the card and the interior surfaces of the receiver determines the magnitude of the force required to remove the card from the receiver.

A very small manufacturing tolerance is required to construct the card reader 120 shown in FIG. 9 so that the interior surface of the receiver 12 contacts the data card and generates sufficient friction to prevent inadvertent movement of a data card once it has been inserted into the receiver. The required manufacturing tolerances can be increased by lining the interior surfaces of the receiver with a compressible material.

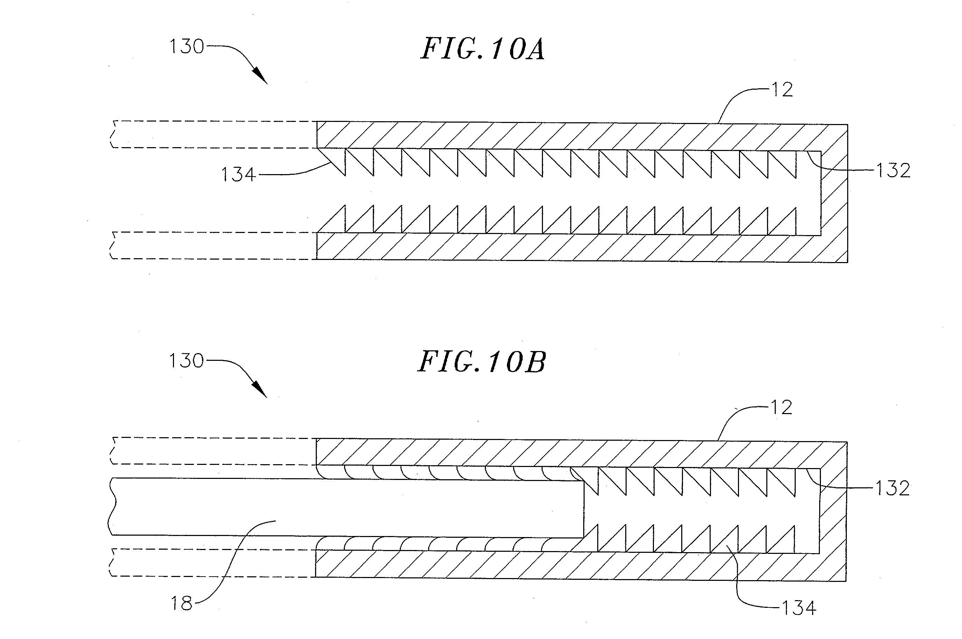

Cross sections of a card reader 130 similar to that shown in FIG. 9 with an interior surface 132 constructed from a resilient compressible material that includes sawtooth features 134 are shown in FIGS. 10A and 10B. The cross-sections are taken along the line 126 defined in FIG. 9. As a data card pushes past each sawtooth feature, the feature is compressed, creating a large contact surface between the feature and the data card. Forcing the card further into the receiver increases the number of compressed sawtooth features in contact with the card and, therefore, increases the friction between the card and the interior surface of the receiver. Consequently, the force required to insert the card is initially small and increases as the card is inserted further inside the receiver. Once inside the receiver, the card is initially difficult to remove, however, less force is required the further the card is withdrawn from the reader. Although the illustrated embodiment shows the use of sawtooth features, any compressible features that create friction between the card surface and the interior surface of the receiver can be used.

The swiping action used by merchants operating conventional magnetic swipe card readers involves grasping the card and swiping it through the reader. The embodiments of card readers in accordance with the present invention that are described above use receivers that almost completely enclose data cards when they are inserted into the receiver. Therefore, care must be exercised in selecting the portion of the card to be clasped when swiping it through the reader. Embodiments of the present invention can be constructed so that a greater portion of a data card extends from the receiver. Such card readers enable a user to be less selective in choosing the portion of a data card to clasp when swiping it in the reader.

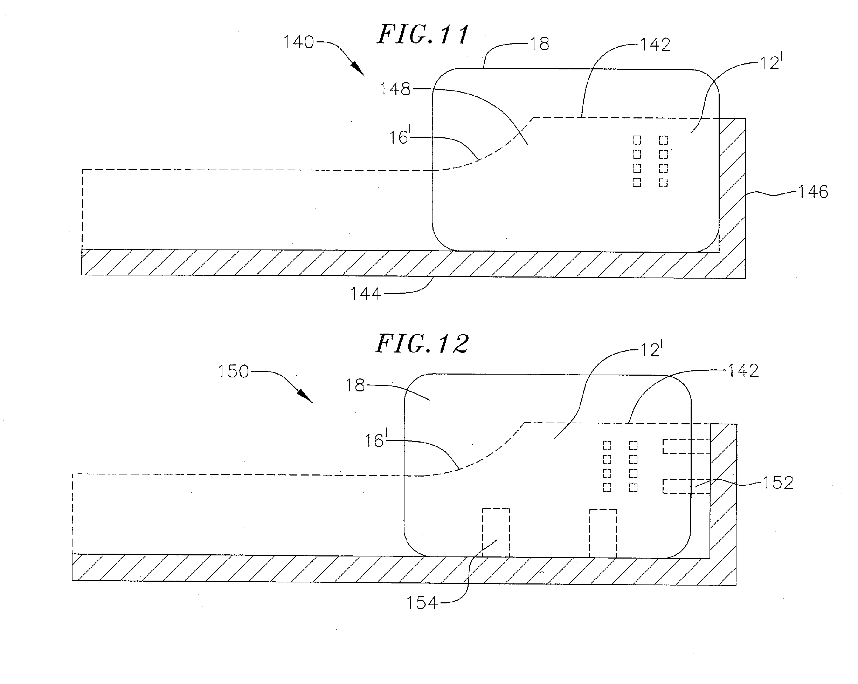

An embodiment of a card reader in accordance with the present invention that provides users with a greater ease of use is shown in FIG. 11. FIG. 11 is a cross-sectional view of a reader 140 that includes a receiver 12', which contains a data card 18. The receiver is constructed so that portions of the data card protrude from the entrance 16' to the receiver and from an opening 142 in the top of the receiver. Movement of a data card inside the receiver is prevented by the base 144, the rear wall 146 and the side walls 148 of the receiver. However, the data card can be removed from the entrance 16' or from the opening in the top of the receiver 142. Removal of the card in either of these ways is resisted by friction between the interior surface of the receiver and the data card.

Other methods exist for preventing the removal of a data card from receivers similar to the receiver 12' shown in FIG. 11. The use of clips to prevent the removal of a data card 18 from the receiver 12' of a reader 150 in accordance with the present invention is shown in FIG. 12. The receiver 12' contains a first set of clips 152 that resist removal of the data card from the entrance 16' of the receiver using the elastic properties of the clips as a spring loading to clasp the card against the interior surfaces of the receiver. The receiver also includes a second set of clips 154 that resist removal of the data card from the opening 142 in the top of the receiver by clasping the card in a similar fashion. The clips can be constructed so that the data card must be forced into the clips. Alternatively, a mechanism similar to one of the mechanisms described above can be used to mechanically or electrically engage the clips in response to the data card being inserted into the receiver.

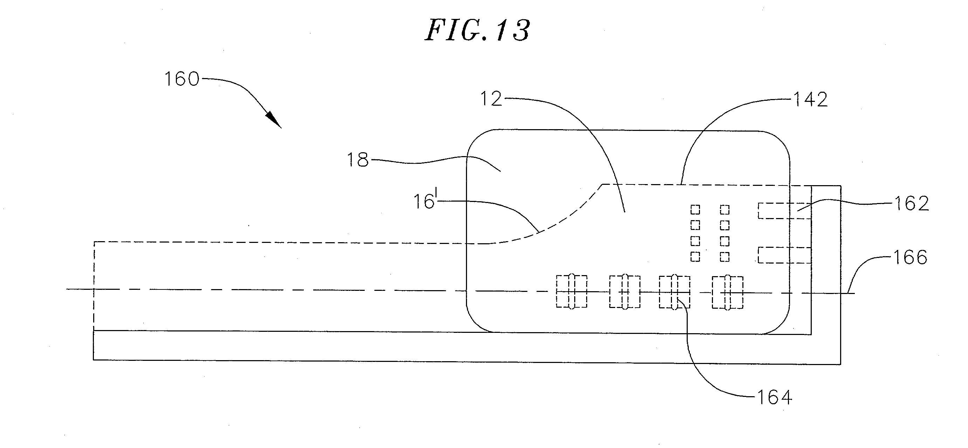

The use of rollers in combination with clips to resist movement of a data card is illustrated in FIG. 13. A cross-sectional view of a card reader 160, which has a data card inserted into its receiver 12', is shown. The receiver includes a pair of clips 162. Once a data card has been forced into the clips, the clips resist removal of the data card from the entrance 18' of the receiver. The receiver also includes a set of rollers 164. The rollers rotate and provide very little resistance to a data card being inserted or removed from the receiver. However, friction between the rollers and the card provides resistance to attempts to remove the card out of the opening 142 in the top of the receiver.

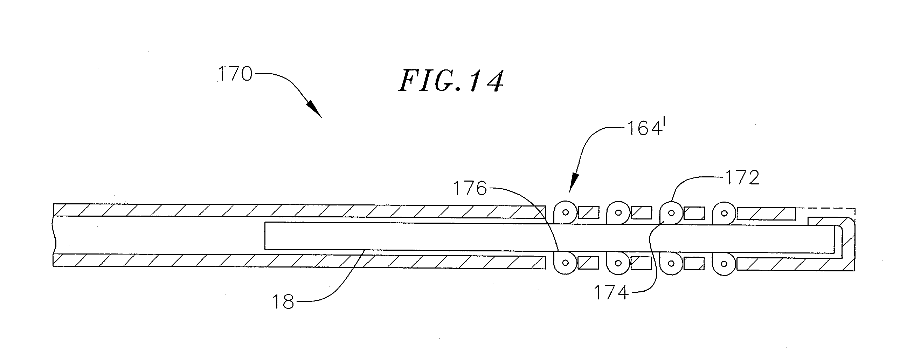

The card reader embodiment shown in FIG. 13 can be modified to include rollers formed to increase the surface area of the roller in contact with a card, when it is inserted into the receiver. The increased surface area increases the magnitude of the frictional force that resists removal of the data card from the opening at the top of the receiver. FIG. 14 is a cross-section taken along the line 166 of FIG. 13 of an embodiment of the card reader of FIG. 13 that includes non-axisymmetrical rollers. The card reader 170 includes rollers 164' that are non-axisymmetrical having a circular portion 172 and an elliptical portion 174. Each roller is calibrated so that the card initially contacts the circular portion causing the roller to rotate until the card is completely inserted into the receiver at which point, the elliptical portion comes into contact with the card and cams inwardly against the card which results in the card being pinched between the pairs of rollers. Once the elliptical portion is in contact with the card, the elongated edge 176 of the elliptical portion sits flush with the card creating a larger contact surface area than if the roller were completely axisymmetrical. The increased contact surface creates increased friction between the rollers and the card and acts to resist attempts to remove the card out of the opening in the top of the receiver in addition to the resistance created by the camming effect of the rollers. In many embodiments, the outside surfaces of the rollers are constructed from materials having a high coefficient of friction to increase the friction forces between cards and the surfaces of the rollers.

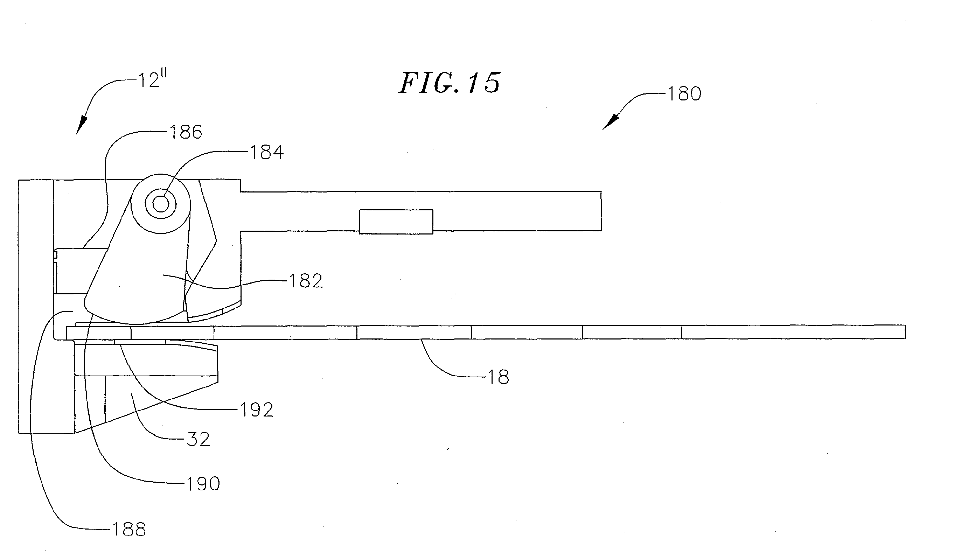

A card reader in accordance with the present invention that uses a wedge roller to resist removal of a card from the card reader's receiver is shown in FIG. 15. The card reader 180 includes a wedge arm 182 that is pivotally mounted via a wedge arm axle 184. Motion of the wedge arm is resisted by a compression spring 186 that can include an internal alignment pin. The surface of the wedge arm that extends into the cavity 188 of the receiver 12" is referred to as the wedge arm locking surface. The receiver wall 32 opposite the wedge arm locking surface forms a card guide 192. When a card is inserted into the receiver, the wedge arm rotates until the distance between the wedge arm locking surface 190 and the card guide 192 is equal to the thickness of the card. At this point the spring maintains the position of the card and wedge arm relative to the receiver. Removal of the card is resisted due to a wedging effect on the wedge arm by the spring, axle and card. The force required to extract the card from the receiver is impacted by the strength of the spring, the coefficients of friction of the card guide, the card and the wedge arm locking surface. Typically, the wedge arm system will inhibit card extraction up to the points the extraction force overcomes the system drag. '

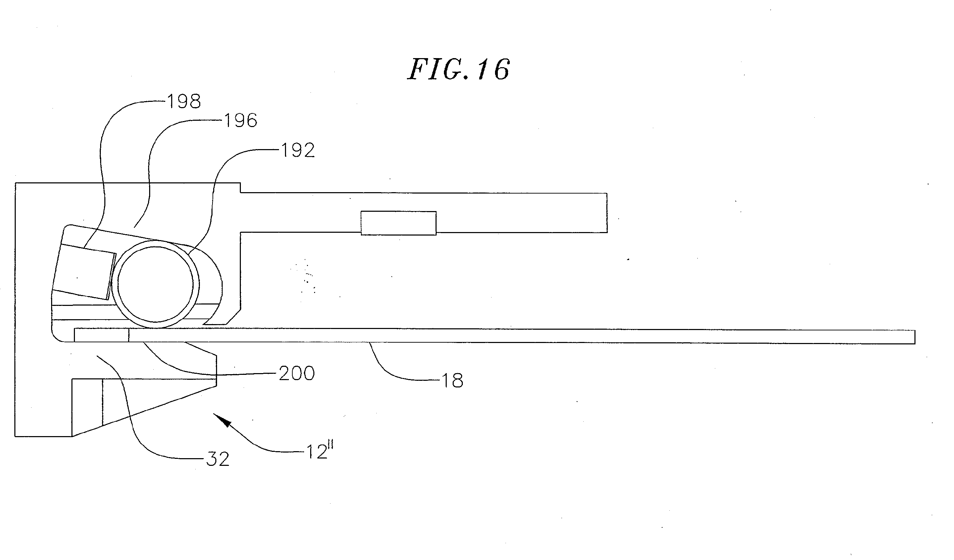

A card reader in accordance with the present invention that uses a lock-wheel to resist removal of cards from the card reader's receiver is shown in FIG. 16. The card reader 190 includes a lock-wheel 192 housed within a cavity 194 in the receiver 12". The interior surface of the cavity is ramped 196 and the lock-wheel is loaded by a spring 198 that is aligned approximately parallel to the ramp surface 196. The wall of the receiver 32 opposite the wall in which the lock-wheel is located includes a card guide surface 200. Initially the width of space between the lock-wheel and the card guide surface is less than the thickness of the card. When a card 18 is inserted into the receiver 12", the lock-wheel rotates along the ramp until the distance between the lock-wheel and the card guide surface is equal to the thickness of the card. At which point, the spring maintains the position of the lock-wheel and the card relative to the receiver. Extraction of the card is resisted due to a wedging effect on the lock-wheel by the ramp surface 196 and the card 18. The extent of the drag created by this effect is dependent upon the angle of the ramp surface, the spring force and the coefficients of friction of the lock-wheel, the ramp surface, the card and the card guide surface.

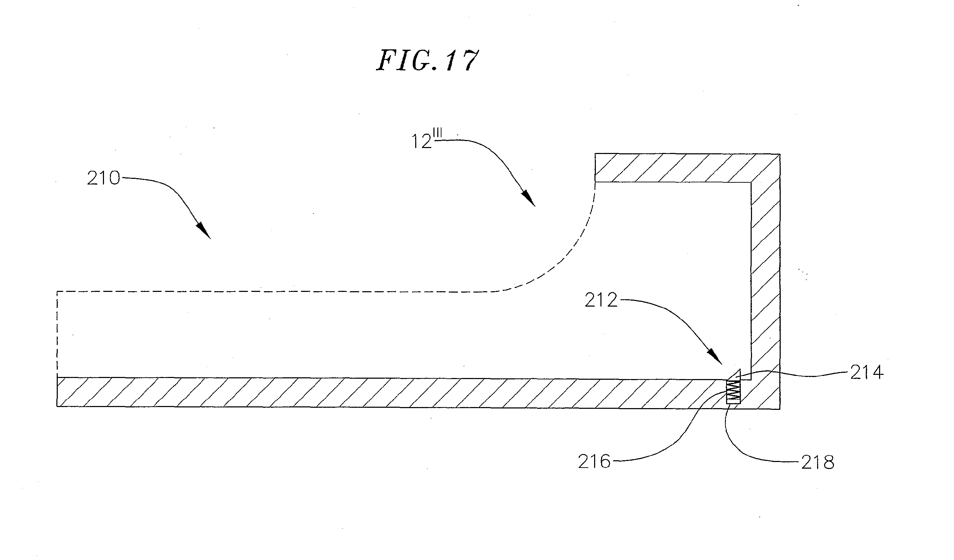

An embodiment of a card reader similar to the card reader illustrated in FIG. 9 is shown in FIG. 17. The card reader 210 includes a sensor 212. The sensor is configured to enable the card reader to detect small movements of a card once it has been inserted into the receiver 12'''. Detecting card movement enables the card reader to perform shut down routines prior to the card being removed from the receiver. In the illustrated embodiment, the sensor includes a spring loaded wedge 214, a spring 216 and a load cell 218. The wedge is forced downward when the card is completely inserted into the receiver. This downward force compresses the spring and generates a signal in the load cell. If the card is removed, the spring decompresses and the signal emanating from the load cell is altered. This alteration can be used to detect the removal of a card and initiate shutdown procedures. In other embodiments, different types of sensors can be used including latches, optical sensors or other sensors configurable to detect the presence or absence of an object. In one embodiment, the sensor is positioned to detect movements of a card inside the receiver in excess of 50 mils. Preferably, card readers in accordance with the present invention can detect movements in excess of 20 mils and more preferably movements in excess of 10 mils.

While the above description contains many specific embodiments of the invention, these should not be construed as limitations on the scope of the invention, but rather as an example of one embodiment thereof. The various techniques described above for resisting or preventing motion of a data card inside the receiver of a data card reader or for sensing movement of a data card can be used in any combination and other structures that achieve the same functions of resisting or immobilizing a data card or sensing movement of a data card can also be used. Accordingly, the scope of the invention should be determined not by the embodiments illustrated, but by the appended claims and their equivalents.

## Claims

1. A data card reader for reading data from a data card possessing an integrated circuit and/or a magnetic stripe, comprising:
guiding walls that form a channel and that are connected to a receiver having an interior surface;
a magnetic reading head mounted on one of the guiding walls;
electrical contacts located on the interior surface of the receiver; and
a latch extending at least partially across the channel formed by the guiding walls.

2. The data card reader of claim 1, further comprising:
a chassis cavity;
wherein the latch is partially located inside the chassis cavity and includes a spring loaded slider.

3. The data card reader of claim 2, further comprising:
a motor connected to the latch; and
wherein the position of the latch is controlled using the motor.

4. The data card reader of claim 1, wherein the latch is pivotally mounted.

5. The data card reader of claim 4, further comprising:
a motor connected to the latch; and
wherein the latch position is controlled using the motor.

6. The data card reader of claim 1, wherein:
the data card cannot move through the channel past the latch, when the latch extends at least partially across the channel; and
the latch is capable of moving so that a data card can pass through the channel.

7. A data card reader for reading data from a data card possessing an integrated circuit and/or a magnetic stripe, comprising:
guiding walls that form a channel and that are connected to a receiver having an interior surface;
a magnetic reading head mounted on one of the guiding walls;
electrical contacts located on the inferior surface of the receiver;
wherein the receiver comprises a base, a rear wall and side walls;
wherein the side walls form an entrance to the receiver;
wherein at least one of the base, rear wall or a side wall is located to have a surface that contacts the card when it is located within the receiver; and
wherein friction between the surface in contact with the card resists removal of the card from the receiver.

8. The data card reader of claim 7, wherein the receiver further comprises a top wall.

9. The data card reader of claim 7, wherein the side walls are also configured to form an opening in the top of the receiver.

10. The data card reader of claim 9, wherein:
the interior surface of the receiver is configured to contact the surface of the data card, when the data card is within the receiver; and
friction between the interior surface and the data card resists removal of the data card from the opening in the top of the receiver.

11. The data card reader of claim 7, wherein an interior surface of the receiver contains compressible features.

12. A data card reader for reading data from a data card possessing an integrated circuit and/or a magnetic stripe, comprising:
guiding walls that form a channel and that are connected to a receiver having an interior surface;
a magnetic reading head mounted on one of the guiding walls;
electrical contacts located on the interior surface of the receiver; and
at least one clip that engages a data card inserted into the receiver;
wherein friction between the clip and the data card resists removal of the data card from the receiver.

13. A data card reader for reading data from a data card possessing an integrated circuit and/or a magnetic stripe, comprising:
guiding walls that form a channel and that are connected to a receiver having an interior surface;
a magnetic reading head mounted on one of the guiding walls;
electrical contacts located on the interior surface of the receiver;
wherein the receiver comprises:
a base;
side walls; and
a roller mounted in a side wall of the receiver;
wherein the side walls form an entrance to the receiver and an opening in the top of the receiver;
wherein the roller is configured to rotate as the data card is inserted into the receiver through the receiver entrance; and
wherein friction between the surface of the roller and the data card resists removal of the data card from the opening in the top of the receiver.

14. The data card reader of claim 13, wherein the roller is non-axisymmetrical.

15. A data card reader for reading data from a data card possessing an integrated circuit and/or a magnetic stripe, comprising:
guiding walls that form a channel and that are connected to a receiver having an interior surface;
a magnetic reading head mounted on one of the guiding walls;
electrical contacts located on the interior surface of the receiver;
wherein the receiver comprises:
at least two side walls;
a rotating wedge mounted in one of the side walls; and
a card guide located on the opposite side wall;
wherein the rotating wedge occupies a first position prior to entry of a data card into the receiver;
wherein inserting a data card into the receiver when the rotating wedge is in the first position, causes the rotating wedge to rotate to a second position;
wherein attempting to remove a data card from the receiver when the rotating wedge is in the second position causes the rotating wedge to force the data card against the card guide in a manner that resists the removal of the data card.

16. The data card reader of claim 15, wherein the pivoting wedge comprises a spring loaded wheel housed within a ramped cavity in a side wall of the receiver.

17. The data card reader of claim 15, wherein the pivoting wedge comprises a wedge arm pivotally mounted within a cavity in one of the side walls of the receiver.

18. A data card reader for reading data from a data card possessing an integrated circuit and/or a magnetic stripe, comprising:
guiding walls that form a channel and that are connected to a receiver an interior surface;
a magnetic reading head mounted on one of the guiding walls;
electrical contacts located on the interior surface of the receiver; and
a sensor configured to detect movement of a card inserted into the receiver.

19. The data card reader of claim 18, wherein the sensor is configured to detect movement in excess of 50 mils.

20. The data card reader of claim 18, wherein the sensor is configured to detect movement in excess of 20 mils.

21. The data card reader of claim 18, wherein the sensor is configured to detect movement in excess of 10 mils.

22. A data card reader for reading data from magnetic stripes located on data cards and from integrated circuits located on data cards, comprising:
means for guiding the magnetic stripe on the data card past a magnetic reading head; and
receiving means for receiving the data card from the guiding means;
communicating means for communicating with the integrated circuit located on the data card; and
means for resisting removal of the data card from the receiver.

23. A method of reading data from a data card including a magnetic stripe and/or an integrated circuit having a set of contacts, comprising the steps of:
moving the magnetic stripe relative to a magnetic reading head;
applying forces to the card that resist motion of the card; and
reading data from the card while the forces that resist motion of the card are applied to the card.
